# EUROPEAN PATENT APPLICATION

(11) **EP 4 374 710 A1**
(43) Date of publication of application: **29.05.2024**
(21) Application number: 23206822.1
(22) Date of filing: 30.10.2023
(51) Int. Cl.: A23P 20/20, A23P 20/25

(54) **SYSTEM AND METHOD FOR PRODUCING FOOD PRODUCTS CONTAINING A FILLING**

(30) Priority: 24.11.2022 IT 202200024267
(71) Applicant: Latteria Montello S.p.A., 31040 Giavera del Montello (Treviso) (IT)
(72) Inventor: DE RUOS, Fausto, 31040 Giavera del Montello (Treviso) (IT); CASAGRANDE, Pietro, 31040 Giavera del Montello (Treviso) (IT); CASAGRANDE, Nicola, 31040 Giavera del Montello (Treviso) (IT)
(74) Representative: Notaro, Giancarlo

(57) **Abstract**

In a system for producing food products comprising a portion (M) of a first food material containing a filling of a second food material, there is provided at least one filling station (2) including an iris diaphragm, which retains the portion (M) of the first food material during filling with the second food material. The system moreover includes an injector device (13), configured to introduce a metered amount of the second material within the portion (M) of the first material, which portion is retained by the iris diaphragm (D). The portion (M) of the first material is deposited in the filling station (2), either manually or in an automated fashion, with the help of a gripping member (4), so as to enable clamping the portion (M) of the first material by means of the iris diaphragm (D). In such a condition, the portion (M) of the first material remains suspended from the iris diaphragm (D) and is ready to receive the filling by the injector device (13). Upon completing the injection of the filling, the iris diaphragm (D) is completely closed, so as to completely close the portion (M) of the first material around the filling material, and so as to obtain a finished product (P) which is thus separated from a waste portion (S) which remains above the iris diaphragm (D), so that the finished product (P) is free to fall over a receiving member (18) placed below the iris diaphragm.

## Description

### Field of the Invention

The present invention refers to systems and methods for producing food products of the type comprising a portion of a first food material containing a filling made of a second food material.

### Known Art

A system having the features provided in the preamble of the annexed Claim 1 is known e.g. from the document JP2012-024102 A**.** Such a system comprises a filling station wherein a portion of the first food material is filled with the second food material. The filling station comprises a clamping device, configured to retain the portion of the first food material during filling with the second food material. The clamping device comprises an iris diaphragm, including an annular plate bearing a circumferential array of engagement members simultaneously displaceable to define between them a central aperture of controllable amplitude. The system moreover comprises an injector device, configured to introduce a metered amount of the second material within the portion of the first material, while the portion of the first material is retained within said central aperture by the engagement members of the iris diaphragm. The injector device is movable between an operative position, above the iris diaphragm, and an inoperative position, spaced apart from the iris diaphragm.

A system conceptually similar to the one described in the foregoing is also described in the Italian Patent IT102019000020823 and in the correspondent International Application WO 2021/094839 A1**.**

The embodiment described in document JP2012-024102 A refers to the production of food products made of a flour dough and containing a filling, while document WO 2021/094839 A1 and the corresponding Italian Patent specifically refer to a system for producing products comprising a portion of a fresh cheese ("mozzarella") containing a filling of a fresh cheese and cream ("stracciatella"). However, such different application do not involve any difference in principle of the structure and the operation of the system.

Both such known solutions envisage that the portion of the first food material is fed to the filling station by means of a transport line including one or more conveyor belts, and that during the filling operation the portion of the first material keeps on lying on the support surface defined by the conveyor belt. Such a choice is unsatisfactory as regards the protection against contaminations of the product during the production process, because the product itself is at least partially exposed, for a non-negligible period of time, along the path towards the filling station. In the following filling step, the portion of the first material increases in volume due to the introduction of the filling. Consequently, both known solutions envisage a mutual movement in the vertical direction between the clamping device, which retains the portion of the first material, and the support surface defined by the conveyor belt whereon said portion lies. In the solution of the Japanese document, the iris diaphragm remains stationary and the conveyor belt, whereon the portion of the first material lies, is lowered, while in the case of document WO 2021/094839 A1 the conveyor belt whereon the portion of the first material lies remains in a vertically fixed position, while the iris diaphragm is lifted. In both cases, such choices involve a relative complexity of the system and of the operation thereof.

### Object of the Invention

An object of the present invention is to provide a system and a method for producing food products containing a filling which overcome the drawbacks of the known solutions discussed in the foregoing.

Specifically, an object of the invention is to provide a system and a method for producing food products containing a filling which guarantee the maximum safety against the risk of contaminating the product during the production process.

A further object of the invention is to achieve such goals by means of a simple and reliable system.

A further object of the invention is to achieve a system as outlined in the foregoing having a relatively high productivity.

Finally, a further object of the invention is to achieve a system as outlined in the foregoing having a relatively low cost.

### Summary of the Invention

In order to achieve one or more of said objects, the invention concerns a system for producing food products of the type comprising a portion of a first food material containing a filling made of a second food material,
wherein said system comprises one or more filling stations, in which the second food material is introduced into said portion of the first food material,
each filling station comprising:
   - a clamping device, configured to retain the portion of the first food material during filling with the second food material, said clamping device comprising an iris diaphragm, including an annular plate bearing a circumferential array of engagement members simultaneously displaceable, by means of an actuator device, in order to define between them a central aperture of controllable amplitude; and
   - an injector device, configured to introduce a metered amount of the second material within the portion of the first material, while said portion is retained within said central aperture by the engagement members of the iris diaphragm,
   - said injector device being movable, by means of one or more actuator devices, between an inoperative position, spaced apart from said iris diaphragm, and an operative position above the iris diaphragm, in which a dispensing nozzle of the injector device is introduced from above within the portion of the first food material, which is retained by said iris diaphragm, and
   - an electronic controller for controlling said actuator devices associated with said clamping device and said injector device,
said system being characterized in that it comprises a gripping member configured to grip said portion of the first material and movable, manually or in an automated manner, to bring said portion into said filling station, by lowering it from above within said central aperture of the iris diaphragm, so as to allow clamping thereof by the iris diaphragm,
so that, when said portion of the first material is clamped within the central aperture of the iris diaphragm, it remains suspended from the iris diaphragm, in a condition in which said portion is ready to receive the filling by said injector device,
said electronic controller being configured to perform the following operations:
   - actuating a clamping of the portion of the first material by said iris diaphragm, after said portion has been lowered from above within said central aperture of the iris diaphragm, by means of said gripping member,
   - actuating a displacement of the injector device to its operative position above the iris diaphragm, after the portion of the first material has been clamped within said iris diaphragm, and controlling the subsequent injection of a metered amount of filling within said portion,
   - upon completing the injection of the filling, moving the injector device away from its operative position, and controlling a complete closing of the iris diaphragm, so as to completely close the portion of the first food material around the filling material, and to obtain a finished product which is thus separated from a waste portion which remains above the iris diaphragm, so that the finished product is free to fall over a receiving member placed below the iris diaphragm.

As can be seen, when the portion of the first material is clamped within the central aperture of the iris diaphragm, it remains suspended from the iris diaphragm, without lying on a support surface, as is the case in the known solutions, which drastically simplifies the structure and the control of the system.

In an embodiment, the receiving member for the finished product is cup-shaped and is movable, by means of an actuator device, between an operative position, arranged below the iris diaphragm, for receiving the finished product discharged from the iris diaphragm, and a downwardly tilted position, for discharging the finished product into a collecting container.

In the preferred embodiment, the gripping member comprises a suction cup device, a conduit for connecting the suction cup device with a vacuum source, and a device for controlling said connection, in order to activate and deactivate the suction cup device.

It is possible to provide the suction cup device with a handle for a manual use by an operator, or it is possible for the suction cup device to be carried by a programmable manipulator robot, so as to automate the operation of loading the portion of the first material onto the iris diaphragm.

In the preferred embodiment, the iris diaphragm comprises said support plate with said central aperture, said circumferential array of engagement members, which are mounted oscillating around the respective axes on the support plate, and a further annular plate rotatably mounted on the support plate and operatively coupled with the engagement members, to cause the movement of the engagement members as a result of a rotation of the rotatable plate with respect to the support plate. In an example, an actuator cylinder is interposed between a stationary structure and a peripheral lug of said rotatable plate, to control the rotation of the rotatable plate with respect to the support plate.

Moreover, in the preferred embodiment, the injector device is carried by an arm protruding in a cantilever fashion from a support column. Said arm is vertically displaceable with respect to the support column by means of a first actuator device. The support column, in turn, is rotatable about a vertical axis thereof by means of a second actuator device, so that the injector device may be moved away from its operative position by means of a vertical lifting movement and by means of a lateral displacement obtained by means of a rotation of the support column.

According to a further aspect, the invention relates to a method for producing food products of the type comprising a portion of a first food material containing a filling made of a second food material, for example for producing a "burrata" product comprising a portion of a fresh cheese (e.g., "mozzarella") containing a filling of a soft fresh cheese and cream ("stracciatella"),
said method comprising the operation of filling the portion of the first food material with the second food material,
wherein the filling operation is performed by retaining, by means of a clamping device, the portion of the first food material during filling with the second food material,
wherein the clamping device comprises an iris diaphragm, including an annular plate bearing a circumferential array of engagement members, which are simultaneously displaceable by means of an actuator device to define between them a central aperture of controllable amplitude,
wherein the filling operation is performed by means of an injector device, by introducing a metered amount of the second material within the portion of the first material while the portion is retained within said central aperture by the engagement members of the iris diaphragm,
wherein the injector device is moved, by means of an actuator device, between an inoperative position, spaced apart from the iris diaphragm, and an operative position above the iris diaphragm, in which a dispensing nozzle of the injector device is introduced from above within the portion of the first food material retained by said iris diaphragm,
said method being characterized in that it comprises the operations of:
   - gripping, by means of a gripping member, the portion of the first material, and lowering said portion from above within said central aperture of the iris diaphragm,
   - clamping the portion of the first material within the central aperture of the iris diaphragm, by means of said iris diaphragm,
so that, when the portion of the first material is clamped within the central aperture of the iris diaphragm, it remains suspended from the iris diaphragm, in a condition in which said portion is ready to receive the filling from said injector device,
   - actuating a displacement of the injector device to its operative position above the iris diaphragm, after the portion of the first material has been clamped within said iris diaphragm,
   - controlling the subsequent injection of a metered amount of filling within said portion of the first material,
   - upon completing the injection of the filling, moving the injector device away from its operative position, actuating a complete closing of the iris diaphragm, so as to completely close the portion of the first material around the filling material, and so as to obtain a finished product which is thus separated from a waste portion remaining above the iris diaphragm, so that the finished product is free to fall over a receiving member placed below the iris diaphragm.

As it is evident from the description provided in the foregoing, the system and the method according to the invention do not involve conveying the portion of the first material to the filling station by transporting it by means of a line of conveyor belts, which prevents the product from being exposed to a risk of contamination.

Moreover, during the filling operation, the portion of the first material does not lie on a support surface defined by a conveyor belt, which enables a drastic simplification of the structure and the operation of the production system.

### Detailed Description of an Embodiment of the Invention

Further features and advantages of the invention will be apparent from the following description with reference to the annexed Drawings, provided by means of non-limiting example only, and wherein:
- Figure 1 is a perspective view of an embodiment of the system according to the present invention,
- Figures 2-4 are plan views showing the inner structure of the iris diaphragm which is part of the system of Figure 1, in three different operating conditions,
- Figure 5 is a perspective view of an exemplary embodiment of a gripping member used in the system according to the invention,
- Figure 6 is a block diagram schematically showing the control means of the system according to the invention,
- Figures 7-14 are schematic elevational views showing the main steps of the method according to the invention.

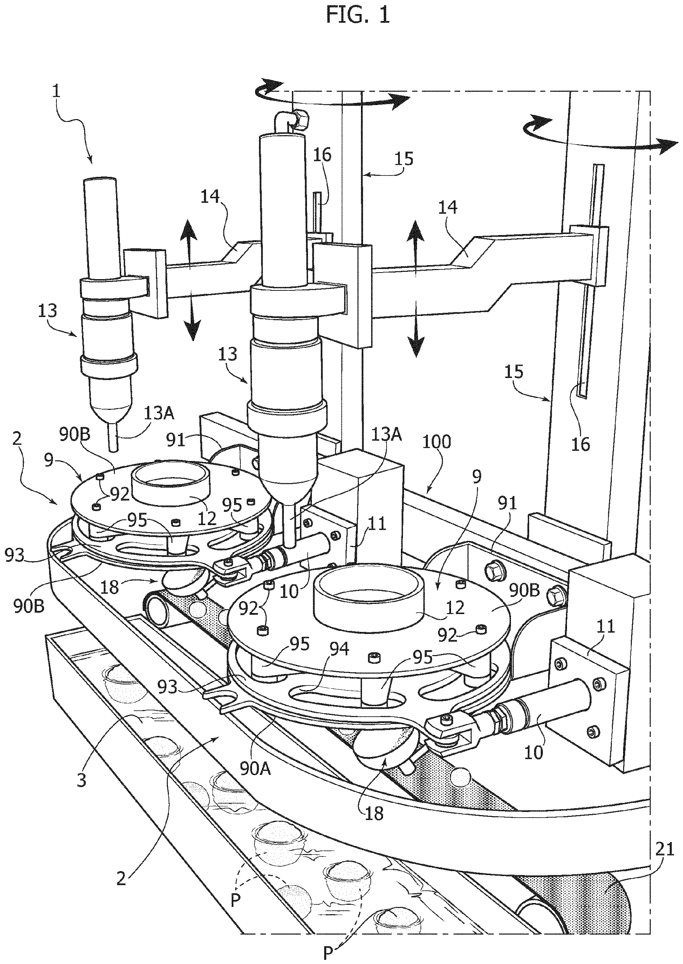

In Figure 1, reference 1 generally denotes a machine for producing food products of the type comprising a portion of a first food material containing a filling of a second food material. The machine 1 is specifically adapted to produce a product such as "burrata", comprising a portion of a fresh cheese (for example, "mozzarella") containing a filling of a soft fresh cheese and cream (so-called "stracciatella").

As it is evident, albeit the present description is provided with reference to such a specific application, the teachings according to the present invention may generally be applied to other food products of the type containing a filling.

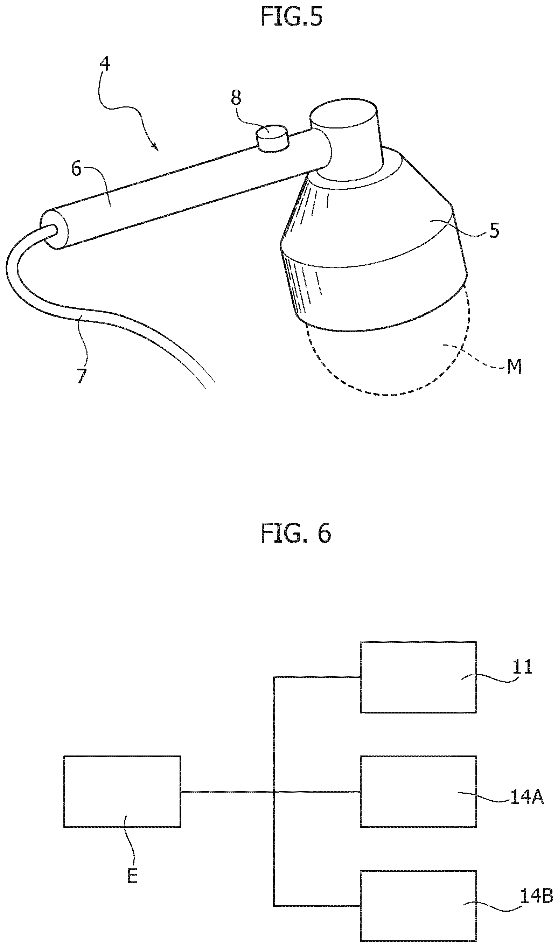

In the presently shown embodiment, the machine 1 comprises two filling stations 2, wherein portions M of a first food material (see Figure 5) are each filled with a second food material, in order to obtain finished products P which are discharged in a collecting container 3 arranged below the machine and filled with water.

In the example shown, each portion M is introduced manually, by an operator, into a filling station 2 by means of a gripping member 4 comprising a suction cup device 5 which activatable by vacuum and which is provided with a handle 6.

The construction details of the suction cup device 5 are neither described nor illustrated herein, as they can be implemented in any known fashion. According to a technique known in itself, the suction cup device 5 is associated with a conduit 7 for the connection to a vacuum source (not shown). Moreover, the handle 6 is associated with a control button 8, which allows the operator to enable the connection with the vacuum source, when the gripping member 4 must be used to grip a portion M, and to disable the connection with the vacuum source when the gripping member 4 must release the portion M in the filling station 2.

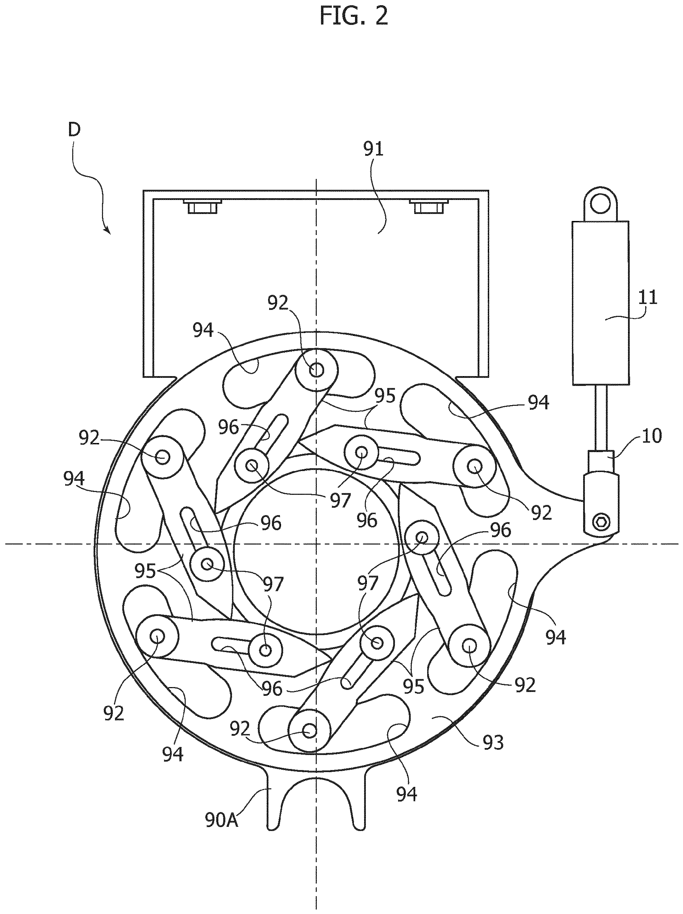

Still referring to Figure 1, as well as to Figures 2-4, each filling station 2 comprises a clamping device 9, to retain a portion M during filling with "stracciatella".

The clamping device 9 includes an iris diaphragm D, the inner structure whereof is visible in the Figures 2-4. In the illustrated example, the iris diaphragm has a pair of mutually spaced annular support plates 90A, 90B, which are supported in a cantilever fashion in a horizontal position by the stationary structure 100 of the machine, by means of a bracket 91. Both support plates 90A, 90B are rigidly connected to each other by means of a circumferential array of spacer pins 92. Above the lower support plate 90A a plate 93 is rotatably mounted having a series of circumferential slots 94 (see Figures 2-4) which enable the plate 93 to rotate with respect to the stationary plates 90A, 90B without interfering with the spacer pins 92. The iris diaphragm D comprises a circumferential array of engagement members 95, which define between them a central aperture of controllable amplitude. Each engagement member 95 has a flat and elongated body, with a slot 96 engaged on a pin 97 carried by the rotatable plate 93. The radially outer end of each engagement member 95, on the other hand, is rotatably mounted on a respective stationary pin 92.

Due to the arrangement described in the foregoing, a rotation of the rotatable plate 93 with respect to the stationary plates 90A, 90B causes an oscillation of each engagement member 95 around the respective stationary pin 92, as a result of the displacement of the respective pin 97 (which follows the rotatable plate 93 in its rotation around the central axis of the device) within the slot 96.

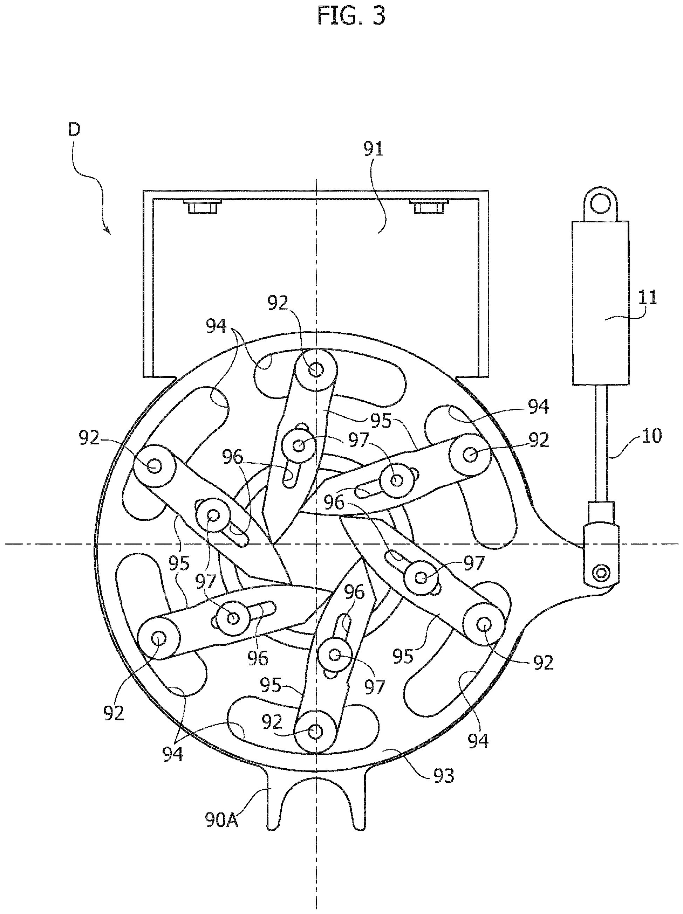

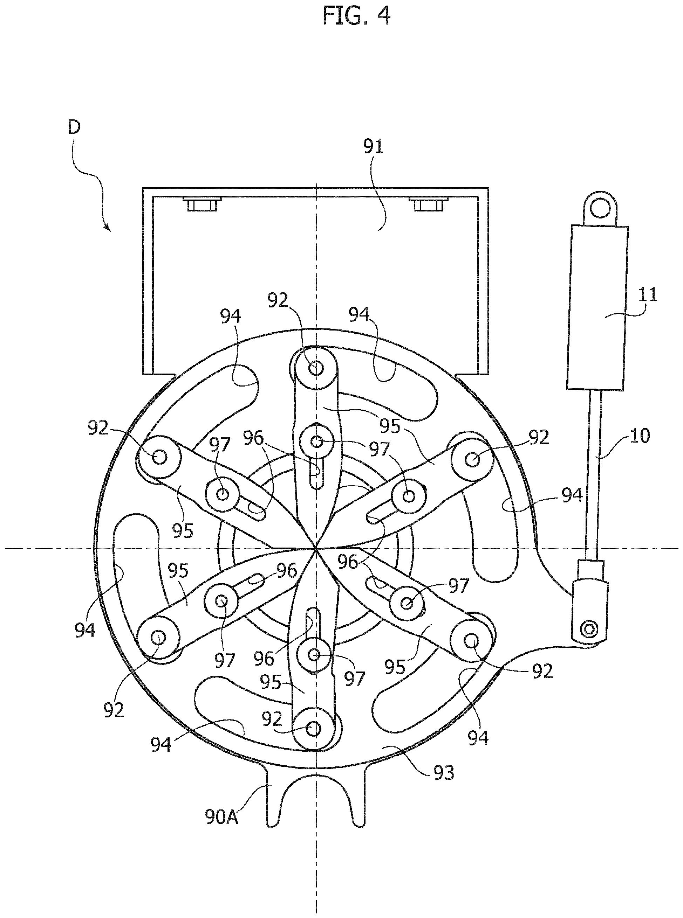

Figure 2 shows the iris diaphragm D in the configuration of maximum opening, Figure 3 shows the iris diaphragm in a partially closed configuration, and Figure 4 shows the iris diaphragm in the completely closed configuration. The radially inner end of each engagement member 95 has a pointed configuration, so that, in the completely closed configuration shown in Figure 4, the iris diaphragm also acts as a cutting member, separating the product portion arranged below the iris diaphragm from the waste portion remaining above the iris diaphragm.

Of course, the specific configuration of the iris diaphragm D which has been described in the foregoing and which is shown in the annexed drawing has been provided by way of non-limiting example only. The system according to the invention may be implemented by using any other known configuration for the iris diaphragm D.

Still referring to the illustrated example, the rotation of the rotatable plate 93 of the iris diaphragm D is actuated by the rod 10 of an actuator cylinder 11. The body of the actuator cylinder 11 is rigidly connected to the stationary structure 100 of the machine, while the rod 10 is connected to a lug 93A of the rotatable plate 93.

In operation, the mozzarella portions M are inserted one at a time into the clamping device 9 of each filling station 2.

In the illustrated example described in the foregoing, such an operation is performed, as previously mentioned, manually by an operator, with the help of the gripping member 4 shown in Figure 5.

The operator uses the gripping member 4 in order to pick up a portion M from a container (not shown), wherein the portions M coming from the production line are immersed in water. The operator activates the suction cup device 5 of the gripping member 4 in order to grip a portion M (Figure 5) and brings it into the upper feed hole 12 (Figure 1) of the iris device D of one of the filling stations. In this way, the portion M carried by the gripping member 4 is arranged within the iris device (which in this step is in the open condition shown in Figure 2). In such a condition, the operator actuates a partial closing of the iris diaphragm D, so as to engage the upper part of the portion M and to retain it in a fixed position within the filling station; subsequently, the operator may deactivate the suction cup member and move the gripping member 4 away from the filling station 2, thus leaving the portion M retained within the filling station by means of the iris diaphragm D.

The filling operation is performed by means of an injector device 13. In the example, the machine comprises an injector device 13 for each filling station 2. The injector device 13 may be implemented according to any known technique, with the purpose of introducing a metered amount of material into the portion M retained by the iris diaphragm D within the filling station 2. The injector device 13 has a dispensing nozzle 13A, configured to be introduced into the portion M the first food material ("mozzarella") in order to fill it with the second food material ("stracciatella"). To this end, each injector device 13 is carried by an arm 14 protruding in a cantilever fashion from a support column 15. The arm 14 is vertically displaceable with respect to the column 15, which has a guiding slot 16 through which an end portion of the arm 14 is arranged, such end portion being connected to a first actuator device 14A (which is shown only schematically in Figure 6) arranged within column 15. In turn, the column 15 may be rotated around its vertical axis, by means of a second actuator device 14B (shown only schematically in Figure 6) in order to displace laterally, with respect to the filling station 2, the injector device 13. The actuator devices 14A, 14B are not described in detail, both because such actuator devices may be implemented in any known manner, and for simplicity of illustration. Also, the Figure does not show the means configured to control the metered amount of material fed by the injector device 13. Such means may be implemented with any known technique as well.

Figure 6 schematically shows an electronic controller E of the machine, such controller being configured and programmed to control the actuator devices 14A, 14B, for the movement of the injector device 13 and of the actuator device 11 of the iris diaphragm D for each filling station 2.

Thanks to the arrangement described in the foregoing, each injector device 13 is movable between an inoperative position, lifted and laterally displaced with respect to the vertical axis of the filling station 2, and an operative position, in which the axis of the injector device 13 is aligned with the axis of the filling station 2 and of the respective iris diaphragm D, and in which the injector device 13 is lowered, so as to introduce the dispensing nozzle 13A into the portion of material M retained by the iris device D.

As can be seen, when the portion of material M is inserted in the filling station 2 and is retained in position by means of a partial closing of the iris diaphragm D, the portion of material M simply remains suspended from the iris diaphragm.

In operation, upon completing the filling operation of the portion M with the filling material, the injector device 13 is moved to its inoperative position (lifted and laterally displaced with respect to the respective filling station 2), and the iris diaphragm D is completely closed in order to close the passage created in the portion M by the dispensing nozzle 13A of the injector device, so as to obtain a finished product P in which the portion M of the first material completely surrounds the filling material. Indeed, the food material constituting the portion M is such as to enable a mutual bond of the parts of material which surround said passage by means of a simple pressure.

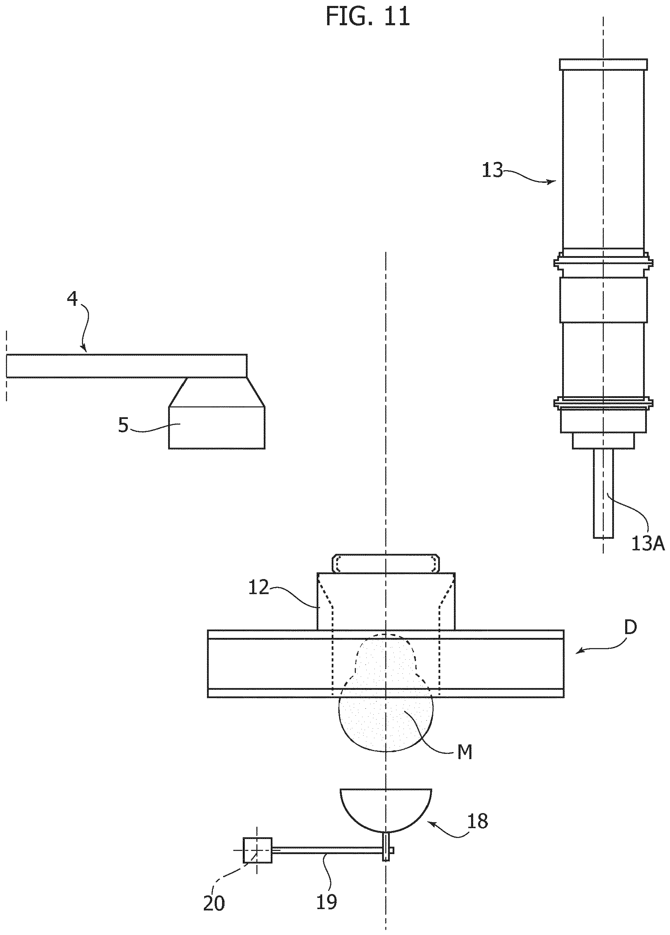

The complete closing of the iris diaphragm leads to the separation of the finished product P thus obtained from the waste portion S (Figure 11), which remains above the iris diaphragm D, so that the finished product P is free to fall.

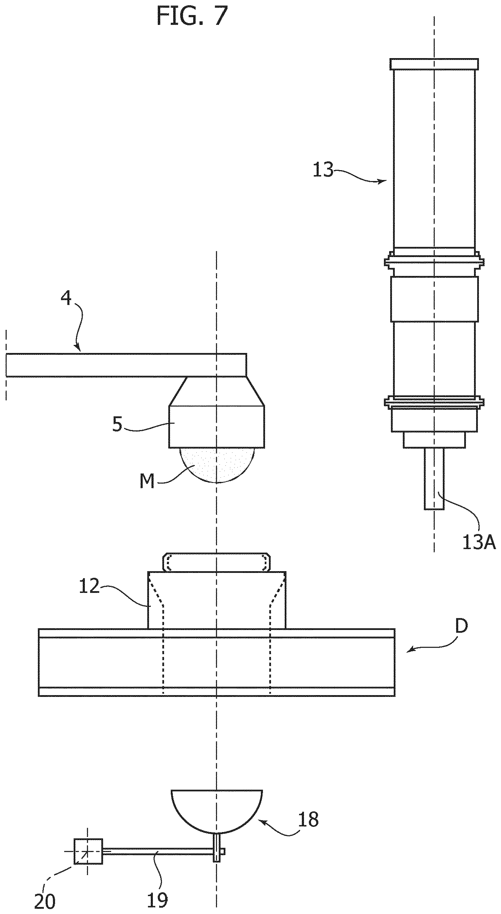

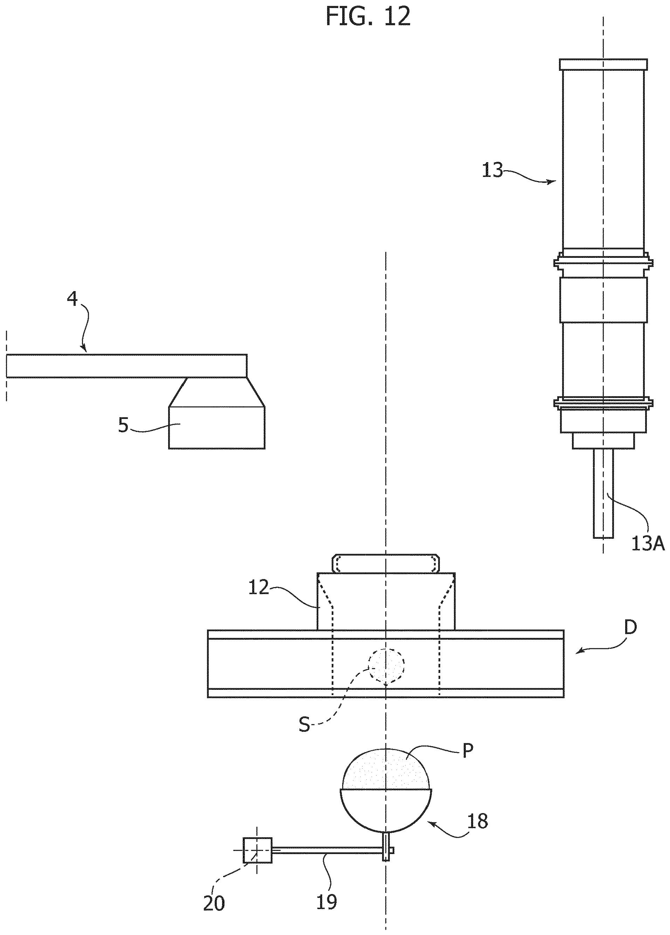

As can be better seen in the Figures 7-14, below the iris diaphragm D of each filling station 2 there is arranged a receiving member 18 for the finished product; in the present example, such a receiving member is cup-shaped and it is carried by an arm 19 which may be rotated, by means of a respective actuator device (not shown) around an axis 20, between a position for receiving the finished product P within the receiving member 18 (see Figure 11) and a rotated position (Figure 12) for discharging the finished product P into a lower container 3 which is filled with water.

Figure 7 shows the step in which the injector device 13 is in its inoperative position, and the gripping member 4 is moved above the iris diaphragm D in order to deposit the portion of material M within the iris diaphragm D.

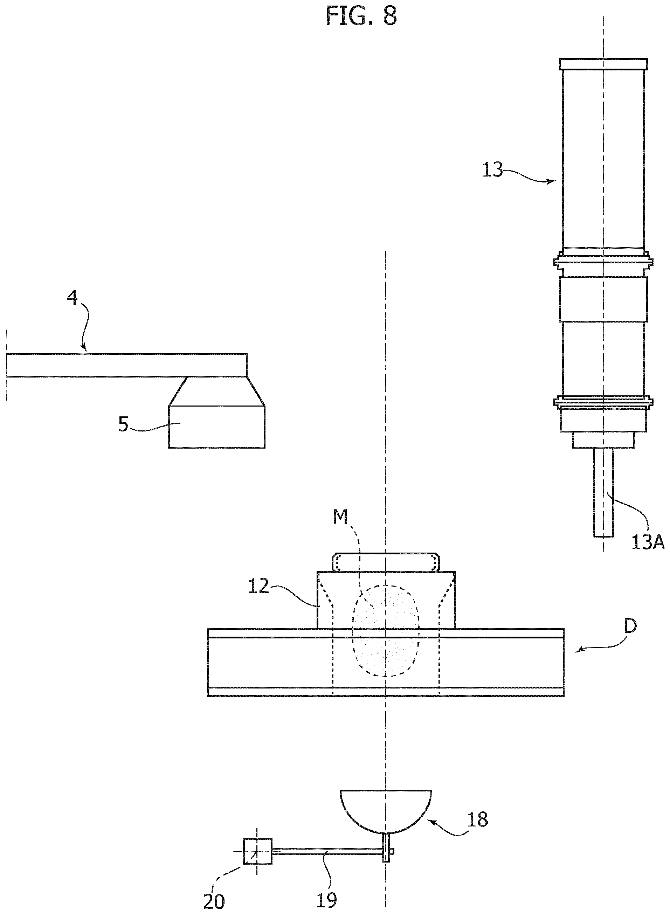

Figure 8 shows the step in which the portion M is clamped within the iris diaphragm D, while the gripping member 4 is moved away from the filling station.

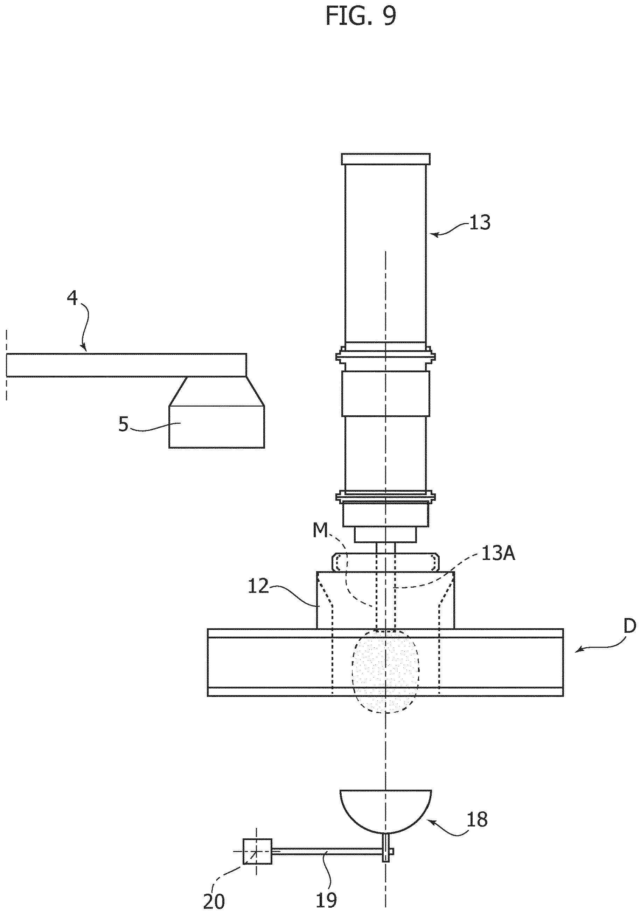

Figure 9 shows the following step, in which the injector device 13 is moved to its operative position, which is aligned with the central axis of the iris diaphragm D and is lowered, in such a way as to introduce the dispensing nozzle 13A into the portion M retained by the iris diaphragm D.

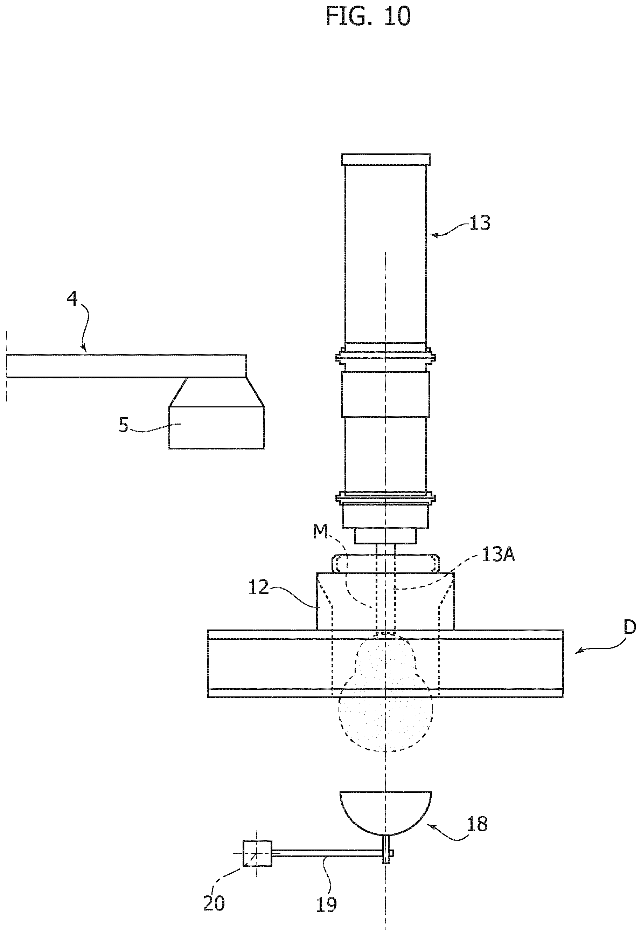

Figure 10 shows the step in which the portion M is filled with the filling material introduced by means of the injector device 13.

Figure 11 shows the following step, in which the injector device 13 is moved to its inoperative position, lifted and laterally displaced with respect to the iris diaphragm D, while portion M is still retained by the iris diaphragm D.

Figure 12 shows the following step, in which the iris diaphragm is completely closed, in such a way as to completely separate the waste portion S located above the iris diaphragm D from the finished product P, which thus falls by gravity into the receiving member 18.

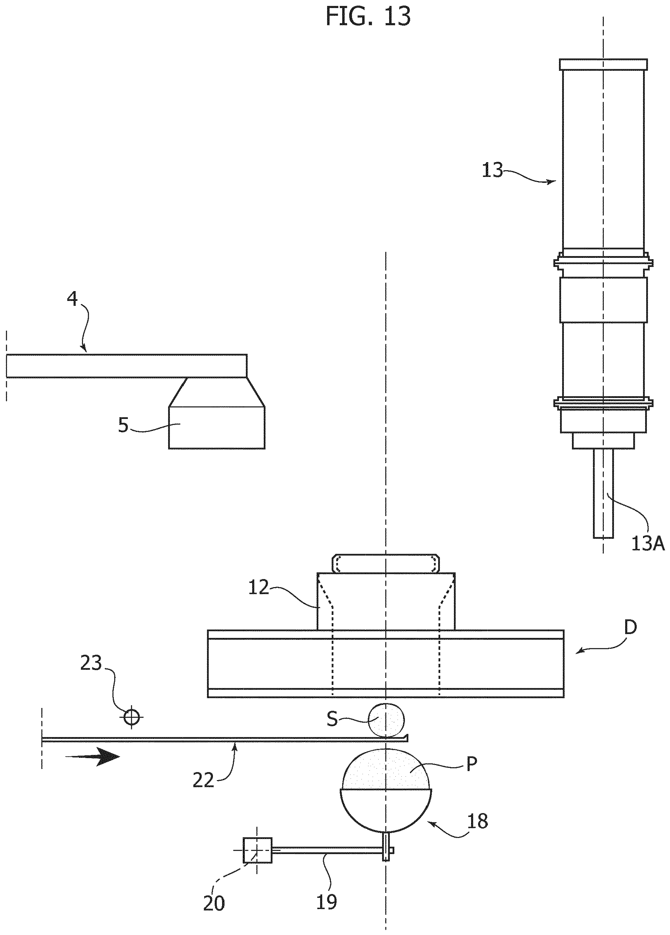

Figure 13 shows the step in which, below the iris diaphragm D, a tray 22 is positioned which slides outside the machine structure, and which in this step protrudes in a cantilever fashion from such a structure, in order to collect the waste S when the iris diaphragm D is opened.

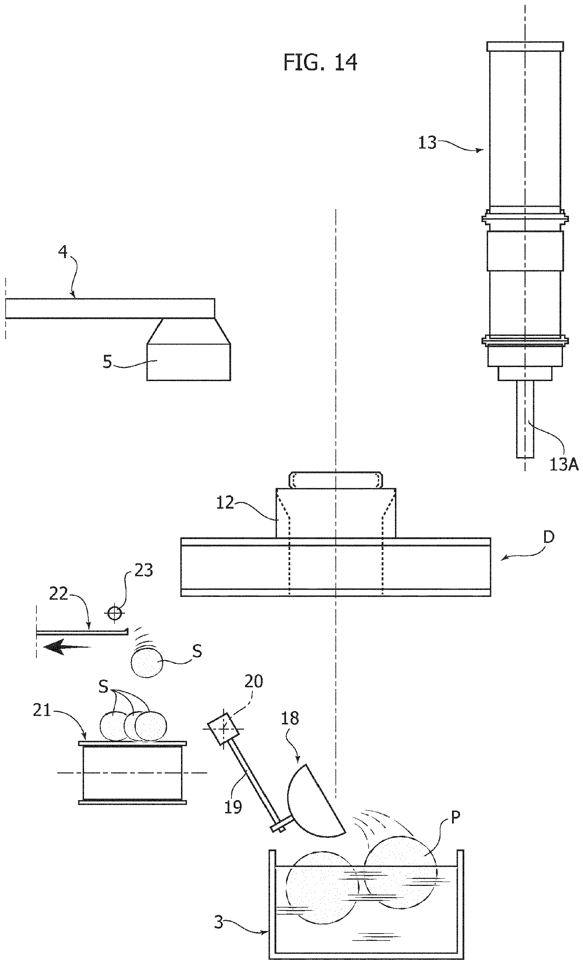

Figure 14 shows the final step, in which the tray 22 is withdrawn, so that the waste S is forced by an abutment 23 to fall onto a conveyor belt 21, while the arm 19 carrying the receiving member 18 is rotated around axis 20 in order to discharge the finished product P into the container 3.

As it is evident from the description provided in the foregoing, the system and the method according to the invention represent a substantial improvement with respect to the known solutions, both as regards the safety against a risk of product contamination, due to the absence of transport lines with conveyor belts to carry the portions of material which will receive the filling materials to the filling station, and, for the same reason, as regards the drastic simplification of the machine components and controls.

In a particularly preferred modification, the operation of introducing the portions of material M which will receive the filling materials into the iris diaphragms of the filling stations is performed in an automated manner, by using gripping members carried by programmable manipulator robots.

Of course, without prejudice to the principle of the invention, the construction details and the embodiments may amply vary with respect to what has been described and illustrated, without departing from the scope of the present invention as defined in the annexed claims.

## Claims

1. A system for producing food products of the type comprising a portion (M) of a first food material containing a filling of a second food material,
wherein said system comprises one or more filling stations (2) in which said second food material is introduced into said portion (M) of the first food material,
each filling station comprising:
- a clamping device, configured to retain the portion (M) of the first food material during filling with the second food material, said clamping device comprising an iris diaphragm (D), including an annular support plate (90A, 90B) bearing a circumferential array of engagement members (95) simultaneously displaceable by means of an actuator device to define between them a central opening of controllable amplitude, and
- an injector device (13), configured to introduce a metered amount of the second material within the portion (M) of the first material while said portion (M) is retained within said central aperture of the iris diaphragm by the engagement members (95) of the iris diaphragm (D),
- said injector device (13) being movable by means of one or more actuator devices between an inoperative position spaced apart from said iris diaphragm (D) and an operative position above said iris diaphragm (D) in which a dispensing nozzle (13A) of said injector device (13) is introduced from above within said portion (M) of said first food material retained by said iris diaphragm (D), and
- an electronic controller for controlling said actuator devices associated with said clamping device (9) and said injector device (13),
said system being **characterized in that** it comprises a gripping member (4) configured to grip said portion (M) of said first material and movable, manually or in an automated manner, to bring said portion (M) into said filling station (2), by lowering it from above within said central aperture of said iris diaphragm (D), so as to allow clamping thereof by said iris diaphragm (D),
so that when said portion (M) of said first material is clamped within said central aperture of said iris diaphragm (D), it remains suspended from said iris diaphragm (D), in a condition in which said portion (M) is ready to receive the filling by said injector device (13),
said electronic controller being configured to perform the following operations:
- actuating a clamping of the portion (M) of the first material by said iris diaphragm (D) after said portion (M) has been lowered from above within said central aperture of the iris diaphragm (D) by means of said gripping member (4),
- actuating a displacement of the injector device (13) to its operative position above said iris diaphragm (D), after said portion (M) of the first material has been clamped within said iris diaphragm, by means of said iris diaphragm (D), and controlling the subsequent injection of a metered amount of filling within said portion (M), by means of said injector device (13),
- upon completing the injection of the filling, moving the injector device (13) away from its operative position, and controlling a complete closing of the iris diaphragm (D), so as to completely close the portion (M) of the first food material around the filling material and obtain a finished product (P) which is thus separated from a waste portion (S) which remains above the iris diaphragm (D), so that the finished product (P) is free to fall over a receiving member (18) placed below the iris diaphragm (D).

2. System according to claim 1, **characterised in that** said receiving member (18) for receiving the finished product (P) is cup-shaped and is movable, by means of a respective actuating device, between an operative position arranged below the iris diaphragm (D), for receiving the finished product (P) discharged from the iris diaphragm (D) and a downwardly tilted position, for discharging the finished product (P) into a collecting container (3).

3. System according to claim 1, **characterised in that** the gripping member (4) comprises a suction cup device (5), a conduit (7) for connecting the suction cup device (5) with a vacuum source, and a control member (8) for controlling said connection, in order to activate and deactivate the suction cup device (5).

4. System according to claim 3, **characterised in that** the suction cup device (5) is provided with a handle (6) for manual use by an operator.

5. System according to claim 3, **characterised in that** the suction cup device (5) is carried by a programmable manipulator robot.

6. System according to claim 1, **characterised in that** the iris diaphragm (D) comprises said support plate (90A, 90B) and an annular plate (93) rotatably mounted on said support plate (90A, 90B) and operatively connected with said engagement members (95) to cause movement of said engagement members (95) as a result of a rotation of said rotatable plate (93) with respect to said support plate (90A, 90B).

7. A system according to claim 6, **characterised in that** the iris diaphragm (D) is provided with an actuator cylinder (11) operatively interposed between a stationary structure (100) and a peripheral lug (93A) of said rotatable plate (93) to control the rotation of said turntable (93) with respect to the support plate (90A, 90B).

8. System according to claim 1, **characterised in that** the injector device (13) is carried by an arm (14) protruding in a cantilever fashion from a support column (15), said arm (14) being vertically displaceable with respect to the support column (15) by means of a first actuator device and said support column (15) being rotatable about a vertical axis thereof by means of a second actuating device, so that the injector device (13) can be moved away from its operative position by means of a vertical lifting movement and by means of a lateral displacement obtained by means of a rotation of the support column (15).

9. A method for producing food products of the type comprising a portion (M) of a first food material containing a filling of a second food material, for example for producing a burrata type product comprising a portion of a fresh cheese (M) containing a filling of a soft fresh cheese and cream,
said process comprising the operation of filling said portion (M) of the first food material with the second food material,
wherein said filling operation is performed by retaining, by means of a clamping device (9), said portion (M) of the first food material during the filling with the second food material,
wherein said clamping device (9) comprises an iris diaphragm (D), including an annular support plate (90A, 90B) bearing a circumferential array of engagement members (95) simultaneously displaceable by means of an actuator device to define between them a central opening of controllable amplitude,
wherein the filling operation is performed by means of an injector device (13), by introducing a dosed amount of the second material within the portion of the first material while said portion (M) is retained within said central opening by the engagement members (95) of the iris diaphragm (D),
wherein said injector device (13) is moved, by means of one or more actuator devices, between an inoperative position spaced apart from said iris diaphragm (D) and an operative position above said iris diaphragm (D), in which a dispensing nozzle (13A) of the injector device (13) is introduced from above within the portion (M) of the first feed material retained by said iris diaphragm (D), and
said method being **characterised in that** it comprises the operations of
- gripping, by means of a gripping member (4), said portion (M) of said first material and lowering said portion (M) from above within said central opening of said iris diaphragm (D),
- clamping said portion (M) of the first material within said central opening of the iris diaphragm (D) by means of said iris diaphragm (D)
so that when said portion (M) of the first material is clamped within the central aperture of said iris diaphragm (D), it remains suspended from said iris diaphragm (D), in a condition in which said portion (M) is ready to receive the filling from said injector device (13),
controlling a displacement of the injector device to its operative position above said iris diaphragm (D), after said portion (M) of said first material has been clamped within said iris diaphragm (D),
controlling the subsequent injection of a metered amount of filling within said portion (M), by means of said injector device (13),
once the injection of the filling has been completed, moving the injector device (13) away from its operative position, actuating a complete closing of the iris diaphragm (D), so as to completely close the portion (M) of the first material around the filling material and obtain a finished product (P) which is thus separated from a waste portion (S) remaining above the iris diaphragm (D), so that the finished product (P) is free to fall over a receiving member (18) placed below the iris diaphragm (D).

10. A method according to claim 9, **characterised in that** the receiving member (18) for receiving the finished product is configured as a cup and is movable between a horizontal operative position arranged below the iris diaphragm (D) to receive the product discharged from the iris diaphragm (D), and a downwardly tilted position to discharge the received product (P) into a collection container (3).
